# EUROPÄISCHE PATENTSCHRIFT

(11) **EP 1 034 830 B1**
(45) Veröffentlichungstag und Bekanntmachung des Hinweises auf die Patenterteilung: **05.09.2007**
(21) Anmeldenummer: 00103839.7
(22) Anmeldetag: 24.02.2000
(51) Int. Cl.: B01D 46/42, B01D 46/24, B01D 46/02, B01D 46/10, B01D 46/04

(54) **Vorrichtung zur Filtration eines mit Aerosolen beladenen Gasstromes**
Apparatus for filtering an aerosol-bearing gas stream
Dispositif pour filtrer un courant gazeux chargé d'aérosols

(30) Priorität: 11.03.1999 DE 19910744
(43) Veröffentlichungstag der Anmeldung: 13.09.2000
(73) Patentinhaber: M+W Zander Gebäudetechnik GmbH, 70499 Stuttgart (DE)
(72) Erfinder: Felser, Hans, 52078 Aachen (DE); Martinsteg, Hans, 52159 Roetgen (DE)
(74) Vertreter: Bauer, Dirk

(56) Entgegenhaltungen:
- EP-A- 0 135 614
- EP-A- 0 528 545
- EP-A- 0 806 233
- EP-A- 0 846 488
- WO-A-97/30774
- US-A- 5 837 040
- PATENT ABSTRACTS OF JAPAN vol. 1995, no. 10, 30. November 1995 (1995-11-30) & JP 07 191189 A (NIPPON MUKI CO LTD), 28. Juli 1995 (1995-07-28)

## Beschreibung

Die Erfindung betrifft eine Vorrichtung zur Filtration eines mit Aerosolen beladenen Gasstromes, mit einem Gehäuse, das einen Rohgasraum und einen Reingasraum aufweist, mindestens einem Filterelement, das derart in dem Gehäuse angeordnet ist, daß eine Gasströmung von dem Rohgasraum in den Reingasraum lediglich durch ein abscheidendes Medium des Filterelements erfolgen kann, und einer von einem Wechselkragen mit zwei umlaufenden Nuten umgebenen Wechselöffnung in dem Gehäuse, durch die das Filterelement kontaminationsfrei nach der Schutzsack-Wechselmethode einführbar und entnehmbar ist.

Derartige Filtervorrichtungen sind allgemein bekannt und werden beispielsweise in kerntechnischen Anlagen zur Abscheidung von Stäuben, die mit Radionukliden kontaminiert sind, aus derart belasteten Luftströmen eingesetzt. Eine derartige gattungsgemäße Vorrichtung ist z.B. in dem Prospekt "Schwebstoff-Filtergehäuse" der Firma H. Krantz GmbH & Co. beschrieben. An dem Filtergehäuse befindet sich ein Wechselkragen mit zwei umlaufenden Nuten, an dem ein Wartungssack mittels Hohlschnurringen befestigbar ist. Bevor ein beladenes Filterelement aus dem Gehäuse entfernt werden kann, muß der Wartungssack in seiner Länge nach außen gerollt werden. Sodann kann das Filterelement als solches aus dem Gehäuse in den Wartungssack verlagert werden, wobei der Wartungssack von Bedienpersonal nach Art eines Handschuhs verwendet wird. Der Wartungssack ist hinreichend lang ausgeführt, um zwischen dem darin befindlichen Filterelement und dem Wechselkragen abgeschweißt zu werden. Das in den Wartungssack eingeschweißte Filterelement kann dann als Ganzes entsorgt werden, während der verschweißte Rest des Sackes zunächst an dem Wechselkragen verbleibt. Das hintere Spannband an dem Wechselkragen muß gelöst und nach hinten auf den Wechselkragen geschoben werden. Das Ende des Wartungssacks wird nun nach vorne umgeschlagen. Anschließend wird in die nun freie hintere Nut des Wechselkragens ein neuer Wartungssack mit einem neuen Spannband angeschlossen, wobei in diesen Wartungssack zuvor ein neues Filterelement eingelegt wurde.

Durch den neuen Wartungssack hindurch wird anschließend zunächst der Rest des vorangegangenen Wartungssacks einschließlich des zugehörigen Spannbandes aus der vorderen Nut entfernt und verbleibt in dem neuen Wartungssack. Das auf dem Wechselkragen verbleibende Spannband wird nun in die vordere, frei gewordene Nut gelegt, so daß der neue Wartungssack wieder mit zwei Spannbändern fixiert ist. Darauf folgend kann das neue Filterelement aus dem Wartungssack durch die Gehäuseöffnung in das Filtergehäuse eingeschoben werden.

Während der gesamten Zeit des Filterwechsels ist das Gehäuse durch einen Wartungssack verschlossen, ohne daß hierbei irgendeine Undichtigkeit auftritt. Nach Einführung des neuen Filterelements und Aufrollen des Wartungssacks kann die Gehäuseöffnung mit einem über den Wechselkragen greifenden festen Deckelteil verschlossen werden. Wenn das neue Filterelement wiederum bis zu einer gewissen Grenze beladen ist, wiederholt sich der vorbeschriebene Wechselvorgang in identischer Weise.

Der Nachteil dieser bekannten Vorrichtung ist darin zu sehen, daß die Abreinigung der bekannten kassettenförmigen Filterelemente lediglich mit Hilfe eines die gesamte Querschnittsfläche des Filterelements in einem dichten Abstand überfahrenden, druckluftbeaufschlagten Düsenbalkens möglich ist. Der Düsenbalken und seine Verfahreinrichtung sind aufwendig in der Konstruktion und erhöhen die Gesamtkosten einer derartigen Vorrichtung daher nicht unerheblich. Dies gilt insbesondere dann, wenn zur Erzielung großer Filterflächen mehrere Filterelemente eingesetzt werden müssen.

Aus dem Stand der Technik bekannt sind des weiteren noch sogenannte Patronenfilter, Schlauchfilter oder Filtermatten, bei denen es sich um handelsübliche Standardbauteile handelt. Bei Patronenfiltern ist ein Filtergewebe zickzackförmig und im Querschnitt kreisringförmig angeordnet. Während eine Stirnseite der Patrone geschlossen ist, ist die andere Stirnseite offen und mit einer ringförmigen Dichtung umgeben. Auf diese Weise wird bei Anordnung des Dichtungsrings am Rand einer Durchtrittsöffnung in einer Wand sichergestellt, daß eine Durchströmung ausschließlich durch das Filtergewebe erfolgen kann.

Als Beispiel für ein Patronenfilter sei die DE 26 37 559 genannt, die ein Patronenfilter beschreibt, bei dem eine Abreinigung nicht vorgesehen oder möglich ist, da der Einsatz als Schwebstofffilter eine hinreichend lange Standzeit auch ohne Abreinigung erlaubt. Zum Austausch des Filters wird dieses zunächst in einen Abfallbehälter abgesenkt, woraufhin ein das Filter umgebener Beutel abgetrennt und verschweißt wird und schließlich das Filter in dem Abfallbehälter zusammengestaucht wird.

Bei sogenannten Filterschläuchen ist ein strumpfartiges Filtergewebe über einen in der Regel zylindrischen Stützkorb gezogen. Während eine Stirnseite durch das Filtergewebe des Schlauches verschlossen ist, ist die andere offen und ähnlich wie bei Patronenfiltern mit einer ringförmigen Dichtung umgeben.

Filtermatten stellen quaderförmige Filterelemente dar, in denen sich ein zickzackförmig angeordnetes Filtergewebe befindet. Eine Filtermatte kann somit als eine Abwicklung eines Patronenfilters angesehen werden.

Während die vorgenannten Filterelemente den Vorteil besitzen, daß sie mittels eines aus einer starren Düse austretenden Freistrahls, der entgegen der Durchströmungsrichtung im Betriebszustand gerichtet ist, von Ablagerungen abreinigbar sind, weisen sie den Nachteil auf, daß ihr Wechsel ohne weiteres nicht mit Hilfe der Schutzsack-Wechselmethode möglich ist. Im Stand der Technik werden die beladenen Filterpatronen, -schläuche oder -matten durch Revisionstüren entweder von der Roh- oder von der Reingasseite her von Hand ausgewechselt. Bei diesem Vorgang kommt das Wartungspersonal - das u.U. Schutzkleidung trägt - in direkten Kontakt mit den vom Filtermedium aufgenommenen Schadstoffen. Darüber hinaus läßt es sich kaum vermeiden, daß bei der Herausnahme der Patronen-, Schlauch- oder Mattenfilter aus dem Filtergehäuse die Umgebung durch herabfallende Stäube kontaminiert wird.

Der Erfindung liegt die Aufgabe zugrunde, eine Vorrichtung zur Filtration eines mit Aerosolen beladenen Gasstromes vorzuschlagen, bei der mittels Freistrahlen abreinigbare, standardmäßig verfügbare Filterelemente eingesetzt werden können, die sich kontaminationsfrei auswechseln lassen sollen.

Ausgehend von einer Vorrichtung der eingangs beschriebenen Art, wird diese Aufgabe erfindungsgemäß dadurch gelöst, daß das Filterelement aus einem Tragelement, das abgedichtet im Gehäuse anzuordnen ist, und einer Mehrzahl gasdicht darin eingesetzter Patronenfilter oder Schlauchfilter besteht, wobei das Tragelement gemeinsam mit den Patronenfiltern oder den Schlauchfiltern durch die Wechselöffnung einführbar und entnehmbar ist.

Durch das erfindungsgemäße Tragelement für die Filtermedien wird die Möglichkeit geschaffen, ein Filterelement, das aus handelsüblichen und mittels Druckluftstrahlen abreinigbaren Filtermedien besteht, mit Hilfe der Schutzsack-Wechselmethode austauschen zu können. Bei dieser Methode ist während des gesamten Wechselvorgangs eine Kontamination sowohl des Wartungspersonals als auch der Umgebung durch die ausgefilterten Aerosole ausgeschlossen.

Die Kosten für die erfindungsgemäße Vorrichtung sind dabei sehr niedrig, da Patronenfilter und Schlauchfilter standardmäßig verfügbar sind und aufgrund der großen produzierten Stückzahl einen niedrigen Preis besitzen.

Ein weiterer großer Vorteil der erfindungsgemäßen Vorrichtung ist darin zu sehen, daß das vorgeschlagene Filterelement mit Hilfe von Freistrahlen, die aus starren Düsen austreten, abgereinigt werden kann. Auf die Verwendung einer aufwendigen und teuren Düsenbalken-Reinigungsvorrichtung mit der zugehörigen Mechanik kann gemäß der Erfindung verzichtet werden.

Eine Ausgestaltung der erfindungsgemäßen Vorrichtung ist darin zu sehen, daß das Tragelement kastenförmig ausgebildet und an einer offenen Seite mit einer umlaufenden Dichtung versehen ist, die an einem angepaßten Dichtungsflansch des Gehäuses anliegt und an einer gegenüberliegenden Seite Durchbrüche aufweist, an deren Rändern sich jeweils eine Dichtung eines Patronenfilters oder eines Schlauchfilters abstützt, die sich in das Innere des Tragelements erstrecken.

Auf diese Weise wird eine kompakte Filterelementeinheit gebildet, die durch eine Wechselöffnung von geringer Größe einführbar bzw. entnehmbar ist.

Die Erfindung weiter ausgestaltend, ist vorgesehen, daß mehrere Tragelemente übereinander und/oder nebeneinander angeordnet sind. Auf diese Weise läßt sich eine rasterartige Anordnung von Tragelementen realisieren und dadurch eine auch für große Volumenströme ausreichende Filterfläche erzielen.

Eine Weiterbildung der Erfindung besteht darin, daß eine Abreinigungseinrichtung vorgesehen ist, die mit auf der Reingasseite jedes Schlauchfilters oder Patronenfilters angeordneten Düsen versehen ist, mit denen die Filtermedien durch Druckluftbeaufschlagung abreinigbar sind.

Insbesondere im Falle eines hohen Anteils an Partikeln in dem zu filternden Gasstrom kann die Standzeit der Schlauchfilter bzw. Patronenfilter bis zur Notwendigkeit eines Austauschs hierdurch erheblich verlängert werden. Ein sich lediglich über Millisekunden erstreckender Druckstoß durch die Abreinigungseinrichtung ist immer dann angezeigt, wenn der Differenzdruck zwischen der Reingasseite und der Rohgasseite aufgrund einer gewissen Dicke des Filterkuchens einen bestimmten Wert überschreitet.

Ferner wird vorgeschlagen, das Gehäuse in einem unteren Bereich trichterförmig auszubilden und mit einer verschließbaren Entnahmeöffnung zu versehen.

Auf diese Weise kann der abgereinigte Filterkuchen im unteren Bereich des Gehäuses gesammelt und von dort - z.B. ebenfalls mit Hilfe der Schutzsack-Wechselmethode - einfach entsorgt werden.

Schließlich ist es noch besonders vorteilhaft, die Schlauchfilter oder Patronenfilter entgegen der Schwerkraftwirkung zu durchströmen, da die Schwerkraftwirkung bei der von der Reingasseite erfolgenden Druckbeaufschlagung dann den Ablöseprozeß des Filterkuchens vom Filtermedium sowie eine Ansammlung des Filterkuchens vor der Entnahmeöffnung unterstützt.

Die Erfindung wird nachfolgend anhand eines Ausführungsbeispiels, das in der Zeichnung dargestellt ist, näher erläutert. Es zeigt:
- Fig. 1: einen Längsschnitt durch ein Filterelement;
- Fig. 2: eine Draufsicht auf das Filterelement gemäß Fig. 1;
- Fig. 3: einen Längsschnitt durch eine Filtervorrichtung mit eingesetztem Filterelement gemäß den Fig. 1 und 2;
- Fig. 4 bis 7: eine schematische Darstellung der Schutzsack-Wechselmethode und
- Fig. 8: eine alternative Ausführungsform einer Filtervorrichtung mit acht Filterelementen.

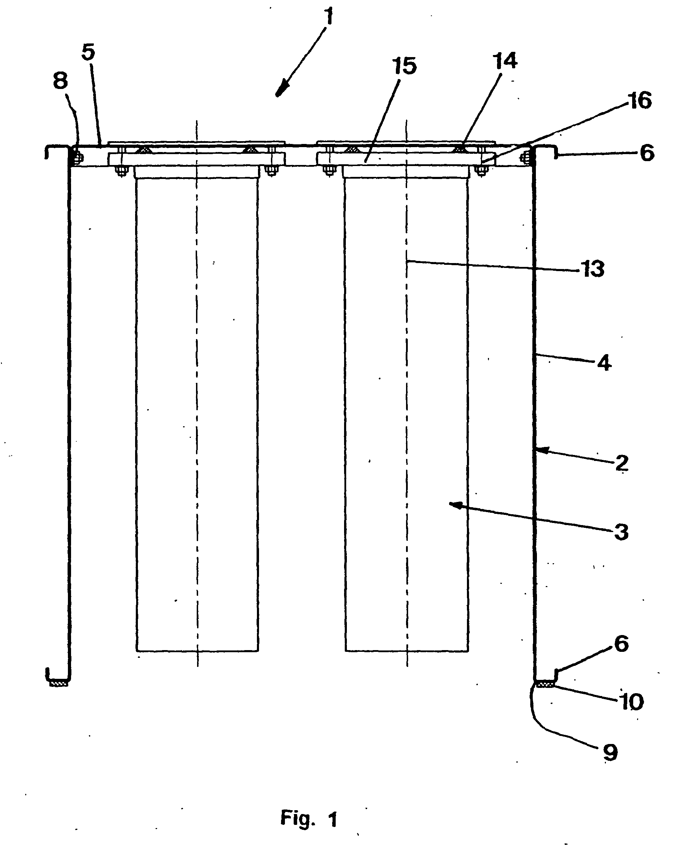

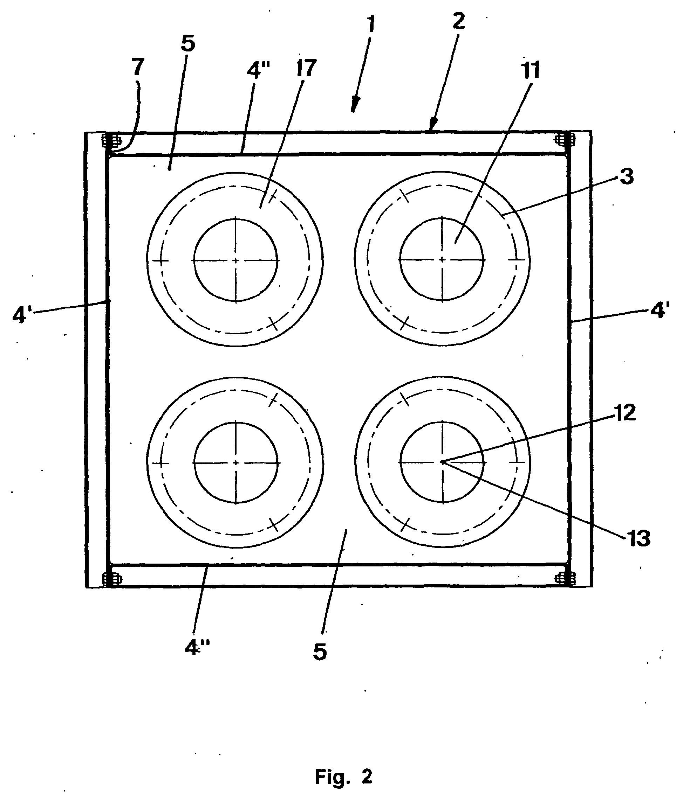

Ein in den Fig. 1 und 2 dargestelltes Filterelement 1 ist aus einem quaderförmigen Tragelement 2 und vier darin eingesetzten Patronenfiltern 3 zusammengesetzt. Das quaderförmige Tragelement ist aus vier Seitenteilen 4' und 4'' und einem Deckelteil 5 gebildet. Die Seitenteile 4' und 4'' sind an ihren oberen und unteren Rändern mit zweifach abgewinkelten Randstreifen 6 versehen. Die Seitenteile 4'' sind zusätzlich an ihren beiden Seitenrändern mit einfach abgewinkelten Randstreifen 7 versehen. Das Deckelteil 5 weist umlaufend um 90° abgewinkelte Randstreifen 8 auf.

An der dem Deckelteil 5 gegenüberliegenden Seite des Filterelements 1 ist dieses über den gesamten Querschnitt offen. Die zu dem Deckelteil 5 parallel verlaufenden Flächen 9 der unteren Randstreifen 6 sind mit einer umlaufenden Dichtung 10 versehen.

Das Deckelteil 5 weist vier äquidistant zueinander angeordnete, kreisförmige Durchbrüche 11 auf, deren Mittelpunkte 12 mit den Längsachsen 13 der Patronenfilter 3 fluchten. Die Patronenfilter 3 sind mit Dichtungsringen 14, die sich an stirnseitigen Flanschen 15 befinden, unter das Deckelteil 5 gepreßt, wobei die Verspannung mit Hilfe von jeweils drei Bolzen-Mutter-Kombinationen 16 erfolgt. Zur Stabilisierung des Deckelteils sind die Bolzen mit einer konzentrisch zu den Durchbrüchen 11 angeordneten Stützscheibe 17 verbunden.

Bei den Patronenfiltern 3 handelt es sich um Standardbauteile mit zickzackförmig gefaltetem und im Querschnitt kreisringförmig angeordnetem Filtergewebe. Die Durchströmung erfolgt dabei während des Filterbetriebs zunächst radial von außen nach innen durch das Filtergewebe und sodann axial im Inneren der Patrone nach oben. Aufgrund des dichten Anschlusses der Filterpatronen 3 an dem Tragelement 2 kann eine Durchströmung des Tragelements ausschließlich durch das Filtergewebe der Patronenfilter 3 hindurch erfolgen.

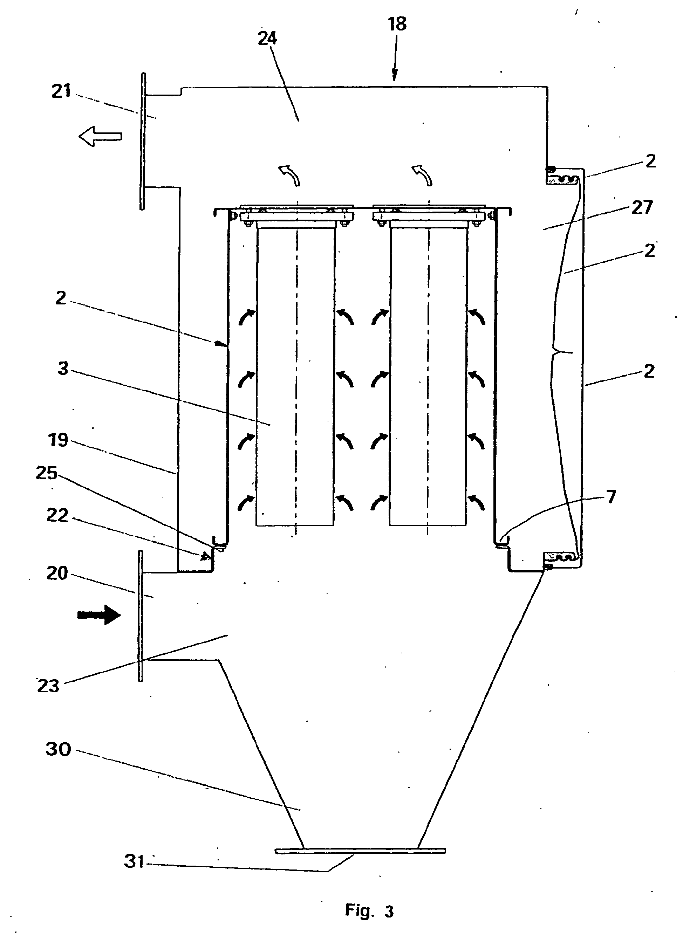

Die in Fig. 3 gezeigte Vorrichtung 18 zur Filtration von partikelbehafteten Gasströmen umfaßt ein als Blechkonstruktion ausgeführtes Gehäuse 19, das mit einem Rohgasstutzen 20 und einem Reingasstutzen 21 versehen ist. Das Innere des Gehäuses wird durch das darin eingesetzte Filterelement 1 sowie einen Trennboden 22 in einen Rohgasraum 23 und einen Reingasraum 24 unterteilt. Der Trennboden 22 weist einen Dichtungsflansch 25 auf, dessen Abmessungen mit den Abmessungen der unteren Randstreifen 7 des Filterelements 2 übereinstimmen. Auf diese Weise wird in Verbindung mit der Dichtung 10 verhindert, daß zwischen den Randstreifen 7 und dem Dichtungsflansch 25 Gas ungefiltert von dem Rohgasraum 23 in den Reingasraum 24 gelangen kann.

Auf Höhe des in Betriebsstellung befindlichen Filterelements 2 weist das Gehäuse 19 eine von einem umlaufenden Wechselkragen 26 umgebene Wechselöffnung 27 auf. Der Wechselkragen 26 ist mit zwei parallel zueinander in dessen Außenseite umlaufenden Nuten versehen, in die unter Vorspannung jeweils ein Hohlschnurring einlegbar ist, um damit einen zuvor über den Wechselkragen 26 gezogenen, aus Kunststoffolie bestehenden Schutzsack zu fixieren.

In Fig. 3 befindet sich der abgeschweißte Rest des Schutzsacks 28 auf dem Wechselkragen 26. In Betriebsstellung der Vorrichtung 18 ist die Wechselöffnung 27 mit einem den Kragen umgreifenden Deckel 29 zusätzlich abgedeckt.

Ein unterer Bereich des Gehäuses 19 ist zu einem Trichter 30 geformt, der an seiner tiefsten Stelle eine verschließbare Entnahmeöffnung 31 besitzt.

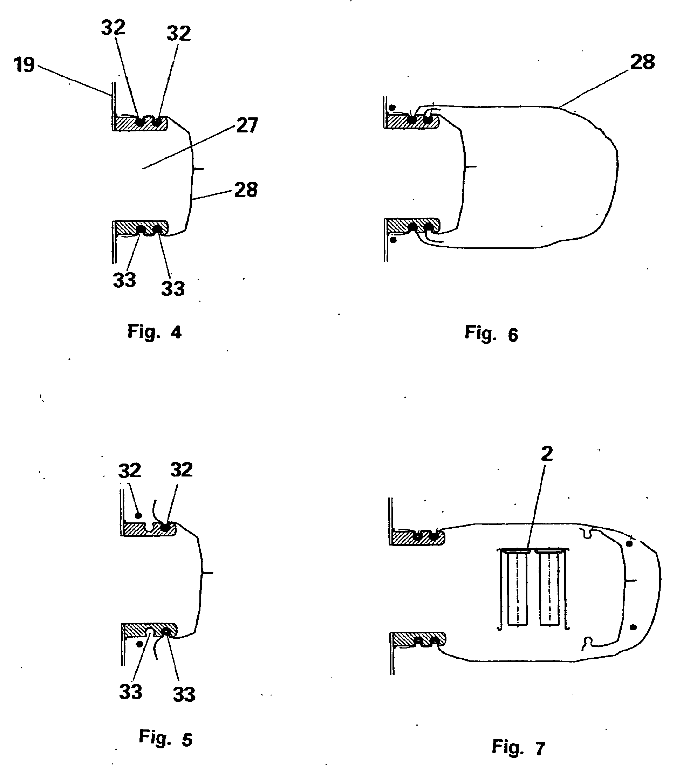

Anhand der Fig. 4 bis 7 wird nachfolgend die Schutzsack-Wechselmethode näher erläutert:

Gemäß Fig. 4 ist die Wechselöffnung 27 durch den abgeschweißten Rest eines Schutzsacks 28 verschlossen. Der Schutzsack 28 ist gasdicht mit zwei Hohlschnurringen 32, die in den beiden hinterschnittenen Nuten 33 des Wechselkragens 26 eingeklemmt sind, befestigt.

Wie aus Fig. 5 ersichtlich ist, wird der dem Gehäuse 19 zugewandte Hohlschnurring 32 aus der Nut entfernt und zwischen dem Gehäuse und der der ihm jeweils zugeordneten Nut 33 plaziert. In der nun freien Nut wird ein neuer Schutzsack 28 mit einem ebenfalls neuen Hohlschnurring 32 plaziert. (Fig. 6)

Unter Nutzung des Schutzsacks 28 als "Handschuh" werden der Hohlschnurring 32 in der vorderen Nut 33 sowie der damit noch fixierte Sackrest abgestreift und in den hinteren Bereich des Schutzsacks gezogen. Nachdem der zwischenzeitlich in Wartestellung befindliche Hohlschnurring 32 nun in der vorderen Nut 33 befestigt wurde, kann das Filterelement 2 in den Schutzsack 28 gezogen werden. Auch hierbei wird der Schutzsack 28 als Handschuh benutzt. (Fig. 7)

Mit dem Abschweißen des Schutzsacks 28 wird das Filterelement 2 darin eingekapselt und gleichzeitig die Wechselöffnung 27 durch den Sackrest verschlossen. Das Einführen einer neuen Filterzelle 2 erfolgt in umgekehrter Reihenfolge auf analoge Weise.

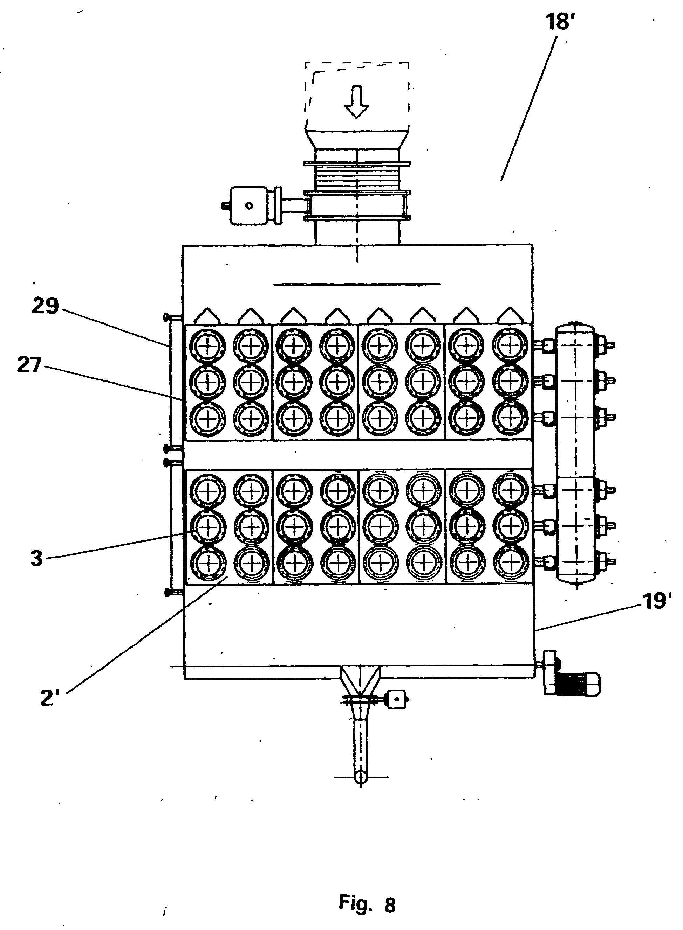

Die in Fig. 8 dargestellte Vorrichtung 18' dient zur Filtration großer Gasvolumenströme und ist aus diesem Grund mit acht Filterelementen 1' versehen, die in analoger Weise zu den in den Fig. 1 und 2 dargestellten Filterelementen 1 aufgebaut sind, jedoch jeweils sechs Patronenfilter 3 aufweisen. Die Filterelemente 1' sind bei der Vorrichtung 18' in zwei Reihen übereinander angeordnet. Die Längsachsen der Patronenfilter sind waagerecht ausgerichtet.

Mit jeder der beiden Reihen von Filterelementen 1' korrespondiert eine Wechselöffnung 27, die wiederum von einem Wechselkragen 26 umgeben und mittels eines Deckels 29 verschließbar ist.

An der Unterseite des Gehäuses 19' der Vorrichtung 18' ist eine trogförmige Entnahmeeinrichtung für abgereinigten Filterkuchen vorhanden.

Aus Übersichtlichkeitsgründen ist sowohl in der Vorrichtung 18 als auch in der Vorrichtung 18' die Abreinigungsvorrichtung für die Patronenfilter 3 nicht dargestellt.

## Patentansprüche

1. Vorrichtung (18, 18') zur Filtration eines mit Aerosolen beladenen Gasstroms, mit einem Gehäuse (19, 19'), das einen Rohgasraum (23) und einen Reingasraum (24) aufweist, mindestens einem Filterelement (1, 1'), das derart in dem Gehäuse (19, 19') angeordnet ist, daß eine Gasströmung von dem Rohgasraum (23) in den Reingasraum (24) lediglich durch ein abscheidendes Medium des Filterelements (1, 1') erfolgen kann, und einer von einem Wechselkragen (26) mit zwei umlaufenden Nuten (33) umgebenen Wechselöffnung (27), durch die das Filterelement (1, 1') kontaminationsfrei nach der Schutzsack-Wechselmethode einführbar und entnehmbar ist, **dadurch gekennzeichnet, daß** das Filterelement (1, 1') aus einem Tragelement (2), das abgedichtet im Gehäuse (19, 19') anzuordnen ist, und einer Mehrzahl gasdicht darin eingesetzter Patronenfilter (3) oder Schlauchfilter besteht, wobei das Tragelement (2) gemeinsam mit den Patronenfiltern (3) oder den Schlauchfiltern durch die Wechselöffnung (27) einführbar und entnehmbar ist.

2. Vorrichtung nach Anspruch 1, **dadurch gekennzeichnet, daß** das Tragelement (2) kastenförmig ausgebildet, an einer offenen Seite mit einer umlaufenden Dichtung (10) versehen ist, die an einem angepaßten Dichtungsflansch (25) des Gehäuses (19) anliegt, und an einer gegenüberliegenden Seite Durchbrüche (11) aufweist, an deren Rändern sich jeweils eine Dichtung (14) eines Patronenfilters (3) oder eines Schlauchfilters abstützt, die sich jeweils in das Innere des Tragelements (2) erstrecken.

3. Vorrichtung nach Anspruch 1 oder 2, **dadurch gekennzeichnet, daß** mehrere Tragelemente (2) übereinander und/oder nebeneinander angeordnet sind.

4. Vorrichtung nach einem der Ansprüche 1 bis 3, **dadurch gekennzeichnet, daß** eine Abreinigungseinrichtung vorgesehen ist, die mit auf der Reingasseite jedes Patronenfilters oder Schlauchfilters angeordneten Düsen versehen ist, mit denen die Filtermedien durch Druckluftbeaufschlagung abreinigbar sind.

5. Vorrichtung nach einem der Ansprüche 1 bis 4, **dadurch gekennzeichnet, daß** das Gehäuse (19) in einem unteren Bereich trichter- oder trogförmig ausgebildet ist und mit einer verschließbaren Entnahmeöffnung (31) versehen ist.

6. Vorrichtung nach einem der Ansprüche 1 bis 5, **dadurch gekennzeichnet, daß** die Patronenfilter oder Schlauchfilter im Betrieb der Vorrichtung entgegen der Schwerkraftwirkung durchströmt werden.

## Claims

1. Apparatus (18, 18') for filtering an aerosol-bearing gas stream, with a housing (19, 19') comprising a raw gas chamber (23) and a pure gas chamber (24), at least one filter element (1, 1') which is arranged in the housing (19, 19') in such a way that gas can flow from the raw gas chamber (23) into the pure gas chamber (24) only through a separating medium of the filter element (1, 1'), and an exchange opening (27) surrounded by an exchange collar (26) with two peripheral grooves (33), through which opening the filter element (1, 1') may be introduced and removed free from contamination according to the protective bag-exchange method, **characterised in that** the filter element (1, 1') comprises a supporting element (2), which should be arranged in the housing (19, 19') so as to be sealed, and a plurality of cartridge filters (3) or bag filters inserted therein so as to be gas-tight, it being possible to introduce or remove the supporting element (2) together with the cartridge filters (3) or the bag filters through the exchange opening (27).

2. Apparatus according to claim 1, **characterised in that** the supporting element (2) is box-like, provided on one open side with a peripheral seal (10) which rests on an adapted sealing flange (25) of the housing (19) and at an opposing side comprises openings (11), at the edges of which a respective seal (14) of a cartridge filter (3) or a bag filter is supported and extends into the inside of the supporting element (2) in each case.

3. Apparatus according to claim 1 or 2, **characterised in that** a plurality of supporting elements (2) is arranged one above the other and/or next to each other.

4. Apparatus according to any one of claims 1 to 3, **characterised in that** a cleaning device is provided which is provided with nozzles arranged on the pure gas side of each cartridge filter or bag filter, with which nozzles the filter media can be cleaned by way of compressed air admission.

5. Apparatus according to any one of claims 1 to 4, **characterised in that** the housing (19) is funnel- or trough-shaped in a lower region and is provided with a closable extraction aperture (31).

6. Apparatus according to any one of claims 1 to 5, **characterised in that** during operation of the apparatus media flows through the cartridge filters or bag filters against the effect of gravity.

## Revendications

1. Dispositif (18, 18') pour la filtration d'un flux de gaz chargé d'aérosols,
avec un boîtier (19, 19') comportant un espace de gaz brut (23) et un espace de gaz purifié (24), au moins un élément filtrant (1, 1'), disposé dans le boîtier (19, 19') de telle façon que la circulation du gaz de l'espace de gaz brut (23) vers l'espace de gaz purifié (24) ne puisse se faire qu'à travers un substrat séparateur de l'élément filtrant (1, 1'), et une ouverture de remplacement (27) entourée d'un collet de remplacement (26) avec deux gorges périphériques (33), à travers laquelle l'élément filtrant (1, 1') peut être introduit et retiré sans contamination selon la méthode de remplacement avec sac protecteur, **caractérisé en ce que** l'élément filtrant (1, 1') se compose d'un élément portant (2), destiné à être disposé de manière étanche dans le boîtier (19, 19'), et d'une pluralité de filtres à cartouche (3) ou de filtres à manche disposés dans celui-ci de manière étanche au gaz, l'élément portant (2) pouvant être introduit et retiré en même temps que les filtres à cartouche (3) ou les filtres à manche à travers l'ouverture de remplacement (27).

2. Dispositif selon la revendication 1, **caractérisé en ce que** l'élément portant (2) est en forme de boîte, est doté sur une face ouverte d'un joint (10) périphérique qui repose sur une bride d'étanchéité (25) du boîtier (19) et possède sur une face opposée des ouvertures (11) sur les bords desquelles s'appuie un joint (14) d'un filtre à cartouche (3) ou d'un filtre à manche qui s'étend à l'intérieur de l'élément portant (2).

3. Dispositif selon la revendication 1 ou 2, **caractérisé en ce que** plusieurs éléments portants (2) sont disposés les uns au-dessus des autres et/ou les uns à côté des autres.

4. Dispositif selon l'une des revendications 1 à 3, **caractérisé en ce qu'**il est prévu un dispositif de nettoyage qui est doté de buses disposées sur le côté du gaz purifié de chaque filtre à cartouche ou à manche, avec lesquelles les substrats filtrants peuvent être nettoyés par application d'air comprimé.

5. Dispositif selon l'une des revendications 1 à 4, **caractérisé en ce que** le boîtier (19) est en forme d'entonnoir ou d'auge dans une partie inférieure et est doté d'une ouverture de retrait (31) pouvant être fermée.

6. Dispositif selon l'une des revendications 1 à 5, **caractérisé en ce que** les filtres à cartouche ou manche sont parcourus en fonctionnement dans le sens opposé à l'action de la gravité.
